# EUROPÄISCHE PATENTSCHRIFT

(11) **EP 3 533 136 B1**
(45) Veröffentlichungstag und Bekanntmachung des Hinweises auf die Patenterteilung: **12.01.2022**
(21) Anmeldenummer: 17784570.8
(22) Anmeldetag: 28.09.2017
(51) Int. Cl.: H02K 15/12, B08B 5/02, B05B 1/00, B05B 1/20

(54) **ABBLASRING**
BLOW-OFF RING
BAGUE DE SOUFFLAGE

(30) Priorität: 28.10.2016 DE 102016221253
(43) Veröffentlichungstag der Anmeldung: 04.09.2019
(73) Patentinhaber: Bayerische Motoren Werke Aktiengesellschaft, 80809 München (DE)
(72) Erfinder: POHLKÖTTER, Fabian, 86911 Diessen am Ammersee (DE); LANZINGER, Stefan, 84439 Steinkirchen (DE); ZEILHOFER, Stefan, 84095 Furth (DE)
(86) Internationale Anmeldenummer: PCT/EP2017/074637
(87) Internationale Veröffentlichungsnummer: WO 2018/077567

(56) Entgegenhaltungen:
- DE-A1-102009 045 200
- DE-U1-202011 050 673

## Beschreibung

Die vorliegende Erfindung betrifft einen Abblasring. Außerdem betrifft die Erfindung eine Abblasvorrichtung umfassend zumindest einen derartigen Abblasring. Mit dem Abblasring und/oder der Abblasvorrichtung sind Komponenten eines Elektromotors reinigbar.

Aus dem Stand der Technik ist bekannt, Elektromotoren zu fertigen. Solche Elektromotoren werden unter anderem in Fahrzeugen eingesetzt. Im Falle eines Einsatzes des Elektromotors in einem Fahrzeug sind mehrere Aspekte zu berücksichtigen. So ist vorgesehen, dass eine Statorwicklung von einem Harz umgeben ist. Dabei ist ein vollständiges Tränken der Wicklung sicherzustellen. Sollte dies nicht der Fall sein, so besteht die Gefahr von Luftblasenbildungen, die eine Wärmeabfuhr stören. Allerdings darf sich Harz nicht auf dem Blechpaket des Stators festsetzen, da ansonsten eine spätere reibungslose Funktionsweise des Elektromotors nicht mehr gewährleistet sein kann. Sollte Harz auf dem Blechpaket des Stators aushärten, so ist eine aufwändige Nacharbeit notwendig, oder der gefertigte Stator muss als Ausschuss entsorgt werden.

Um den Stator zu reinigen ist bekannt, dass ein Kupferring gefertigt wird, der eine Vielzahl von Düsen aufweist. Solche Düsen bestehen aus kleineren Kupferröhren. Allerdings hat sich gezeigt, dass diese Röhren während des Einsatzes verbiegen und/oder verstopfen. Dies führte dazu, dass eine Reinigung des Stators nicht mehr vollständig gewährleistet werden kann.

Ein weiterer Abblasring gemäß dem Oberbegriff des Anspruchs 1 ist aus der DE 10 2009 045 200 A1 bekannt. Außerdem beschreibt die DE 20 2011 050 673 U1 einen Abblasring.

Es ist Aufgabe der vorliegenden Erfindung einen Abblasring zum Reinigen von Komponenten eines Elektromotors bereitzustellen, der bei einfacher und kostengünstiger Herstellung und Montage ein sicheres und zuverlässiges Reinigen der Komponenten ermöglicht.

Die Aufgabe wird gelöst durch die Merkmale des unabhängigen Anspruchs. Die Unteransprüche haben bevorzugte Weiterbildungen der Erfindung zum Inhalt.

Die Aufgabe wird somit gelöst durch einen Abblasring zum Reinigen von Komponenten eines Elektromotors, der ein erstes Ringelement und ein zweites Ringelement umfasst. Das erste Ringelement und das zweite Ringelement können insbesondere ringförmig ausgebildet sein. Dabei ist bevorzugt vorgesehen, dass sowohl das erste Ringelement als auch das zweite Ringelement ein L-förmiges Profil oder ein gestuftes Profil aufweisen. Die Form des Profils kann insbesondere einem radialen Schnitt durch das erste Ringelement oder das zweite Ringelement entsprechen. Das erste Ringelement und das zweite Ringelement sind zusammensetzbar, um so einen ringförmigen Hohlraum zu umschließen. Insbesondere wird durch das Zusammensetzen der beiden L-förmigen oder gestuften Profile ein im Wesentlichen O-förmiges Profil oder ein im Wesentlichen rechteckiges Profil generiert. Besonders vorteilhaft ist der Abblasring jederzeit in das erste Ringelement und das zweite Ringelement zerlegbar. Durch die Bauweise des Abblasring, das bedeutet insbesondere durch das Zusammensetzen des Abblasrings aus zwei L-förmigen ineinander eingreifenden Profilen, ist eine Stabilität des Abblasrings sowohl im Einsatz während des Einlegens der Komponenten des Elektromotors als auch während eines Reinigungsvorgangs des Abblasrings und/oder einem Transportvorgang des Abblasring verbessert. Damit ist die Gefahr von Beschädigungen des Abblasrings verringert. Weiterhin ist vorgesehen, dass das erste Ringelement und/oder das zweite Ringelement Düsen aufweisen. Die Düsen sind mit dem ringförmigen Hohlraum verbunden und erstrecken sich entlang einer inneren Umfangsfläche und/oder einer äußeren Umfangsfläche des Abblasrings. Somit kann der Abblasring verwendet werden, um eine radial innere Fläche und/oder eine radial äußere Fläche der Komponente des Elektromotors abzublasen und damit zu reinigen. Um mit dem Abblasring die Komponente des Elektromotors zu reinigen, ist innerhalb des ringförmigen Hohlraums ein Überdruck zu erzeugen. Dieser Überdruck führte zu einem Ausströmen von Fluid durch die Düsen, wodurch die Abblaswirkung erzeugt wird. Dabei ist ersichtlich, dass sich die Düsen aufgrund der Zerlegbarkeit des Abblasrings in das erste Ringelement und das zweite Ringelement einfacher reinigen lassen als dies bei Düsen aus dem Stand der Technik der Fall war. Insbesondere kann jede Düse sowohl von innen als auch von außen, das bedeutet sowohl von derjenigen Seite des ersten Ringelements und/oder des zweiten Ringelements, auf dem sich der Hohlraum befindet, als auch von der Seite des ersten Ringelements und/oder des zweiten Ringelements, auf der ein Austritt von Fluid aus dem Abblasring vorgesehen ist, gereinigt werden. Somit muss der Abblasring bei Verstopfen einer oder mehrerer Düsen nicht zwangsläufig entsorgt werden, sondern kann einfach und aufwandsarm gereinigt werden. Unter einer Düse wird eine Vorrichtung verstanden, durch die das Fluid gerichtet aus dem Abblasring ausströmt. Insbesondere ist die Düse röhrenförmig ausgebildet, wobei ein Querschnitt über den Verlauf der Düse entweder gleich bleiben oder sich verändern kann.

Bevorzugt ist vorgesehen, dass die Düsen als Bohrung innerhalb des ersten Ringelements und/oder des zweiten Ringelements ausgebildet sind. Auf diese Weise ist ein Verbiegen der Düsen verhindert. Außerdem ist das Fertigen einzelner Düsen vereinfacht, so dass mehr Düsen als bei bekannten Abblasringen angebracht werden können. Des Weiteren erlaubt das Fertigen von Düsen in Form von Bohrungen ein exaktes Einstellen einer Ausrichtung der Düsen. Durch eine derartige exakte Einstellbarkeit sind insbesondere Verwirbelungen entgegen der gewollten Abblasrichtung vermeidbar. Sollte die Düse vollständig verstopft sein, sodass eine Reinigung nicht mehr möglich ist, so ist ein Wiederherstellen der Düse durch erneutes Einbringen einer Bohrung ermöglicht. Unter Bohrung ist allgemein eine Öffnung in dem ersten Ringelement und/oder dem zweiten Ringelement zu verstehen, wobei die Öffnung vollständig durch eine Wand des ersten Ringelements und/oder des zweiten Ringelement verläuft.

Ein dem Hohlraum zugewandtes Ende der Bohrung ist besonders vorteilhaft derart ausgebildet, dass dies einen größeren Durchmesser aufweist als ein gegenüberliegendes Ende der Bohrung. Somit ist ein leichtes Reinigen der Düse ermöglicht, wenn der Abblasring in das erste Ringelement und das zweite Ringelement zerlegt ist. Der kleinere Durchmesser an dem gegenüberliegenden Ende der Bohrung erlaubt das Einstellen eines definierten Fluidstroms aus der Düse heraus. Insbesondere stellt somit das Ende der Bohrung mit dem geringeren Radius einen Fluidauslass aus dem Abblasring dar. Durch die Wahl des kleineren Durchmessers ist somit eine Charakteristik der zugehörigen Düse individuell einstellbar.

Bevorzugt ist vorgesehen, dass entweder das erste Ringelement oder das zweite Ringelement die beschriebenen Düsen aufweist. Somit weist entweder das erste Ringelement oder das zweite Ringelement keine Düsen wie oben beschrieben auf. Besonders vorteilhaft ist somit vorgesehen, dass ein Fluid Austritt aus entweder dem ersten Ringelement oder dem zweiten Ringelement erfolgen kann. Das jeweils andere Ringelement ist dann vorteilhafterweise für Fluide nicht durchlässig.

Das erste Ringelement und das zweite Ringelement weisen bevorzugt jeweils zumindest zwei Dichtungsaufnahmen auf. In den Dichtungsaufnahmen sind Dichtungen zum Abdichten des Hohlraums anordenbar. Somit ist sichergestellt, dass Fluid aus dem Hohlraum ausschließlich durch die Düsen den Abblasring verlassen kann. Auf diese Weise ist ein definiertes Reinigen der Komponenten des Elektromotors sichergestellt. Insbesondere ist somit die Qualität der Reinigung verbessert.

Das erste Ringelement ist mit dem zweiten Ringelement formschlüssig und/oder stoffschlüssig und/oder reibschlüssig verbunden. Die Verbindung zwischen erstem Ringelement und zweitem Ringelement ist insbesondere reversibel ausgebildet. Besonders vorteilhaft ist das erste Ringelement mit dem zweiten Ringelement über eine Schraubverbindung, besonders vorteilhaft über zusätzliche Schrauben, insbesondere über vier Schrauben, verbunden. Werden zusätzliche Schrauben verwendet, so ist bevorzugt vorgesehen, dass diese Schrauben eine Schraubenkopfdichtung in Form einer Dichtscheibe aufweisen. Bei den Gewinden, in welche die Schrauben eingeschraubt werden, wird die Dichtheit bevorzugt mit einem Dichtmittel und/oder einem Teflonband gewährleistet.

Das erste Ringelement und/oder das zweite Ringelement sind bevorzugt aus Aluminium und/oder aus Stahl gefertigt. Besonders vorteilhaft ist ein rostfreier Stahl verwendet. Dabei ist insbesondere vorgesehen, dass das erste Ringelement und/oder das zweite Ringelement resistent gegen eine chemische und/oder mechanische Reinigung ist. Somit ist das Reinigen des Abblasrings wiederum vereinfacht, da insbesondere chemische Reinigungsverfahren verwendet werden können.

Die Erfindung betrifft außerdem eine Abblasvorrichtung. Die Abblasvorrichtung umfasst einen inneren Abblasring und einen äußeren Abblasring, wobei der innere Abblasring einen geringeren Außendurchmesser aufweist als ein Außendurchmesser des äußeren Abblasring. Der innere Abblasring umfasst ein inneres erstes Ringelement mit einer Vielzahl von Düsen, während der äußere Abblasring ein äußeres erstes Ringelement mit einer Vielzahl von Düsen umfasst. Die Düsen sind auf einer äußeren Umfangsfläche des inneren Abblasrings und auf einer inneren Umfangsfläche des äußeren Abblasrings angeordnet. Vorteilhafterweise sind außerhalb der beschriebenen Flächen keinerlei zusätzlichen Düsen vorhanden. Somit erfolgt ein Ausströmen von Fluid lediglich über die äußere Umfangsfläche des inneren Abblasring und über die innere Umfangsfläche des äußeren Abblasring ist. Dadurch ist eine Komponente eines Elektromotors zwischen dem inneren Abblasring und dem äußeren Abblasring hindurchführbar, um somit sowohl radial von innen als auch radial von außen abgeblasen und damit gereinigt zu werden. Es ist vorgesehen, dass sowohl der innere Abblasring als auch der äußere Abblasring Abblasringe wie zuvor beschrieben sind. Somit erlaubt die Abblasvorrichtung ein sicheres und zuverlässiges Reinigen der Komponente des Elektromotors, wobei gleichzeitig eine Reinigbarkeit der Abblasvorrichtung selbst durch die Verwendung der zuvor beschriebenen Abblasringe vereinfacht ist. Gleichzeitig ist die Stabilität der Abblasvorrichtung aufgrund der oben beschriebenen Stabilität der Abblasringe verbessert.

Bevorzugt ist der innere Abblasring konzentrisch zu dem äußeren Abblasring angeordnet. Somit erfolgen gleichzeitig ein Abblasen von innen und ein Abblasen von außen. Dies ermöglicht ein vollumfängliches Reinigen der Komponente des Elektromotors.

Der innere Abblasring weist bevorzugt ein inneres zweites Ringelement und der äußere Abblasring weist bevorzugt ein äußeres zweites Ringelement auf. Dabei ist vorgesehen, dass das innere erste Ringelement oder das äußere erste Ringelement und das innere zweite Ringelement oder das äußere zweite Ringelement einstückig als Topfelement ausgebildet sind. Gleichzeitig ist vorgesehen, dass die Komponente des Elektromotors in das Dorfelement einführbar ist. Das Topfelement dient somit insbesondere zum Auffangen des abgeblasenen Harzes. Außerdem ermöglicht der zuvor beschriebene stabile Aufbau zumindest des äußeren Abblasrings eine Verformung des Topfelements zu vermeiden. Insgesamt ist dadurch ein Spiel des Topfelements verhindert, dass durch das Ausbilden des äußeren Abblasring ein Kragen an den Topfelementen vorhanden ist. Somit kann das Topfelement lediglich dünne Wände aufweisen, da eine Verformung dieser dünnen Wände aufgrund des äußeren Abblasrings verhindert ist.

Durch die zuvor beschriebene verbesserte Reinigbarkeit des Abblasring und/oder der Abblasvorrichtung ist ein stets gleichbleibendes Abblasbild erreichbar, wodurch sich eine Notwendigkeit der Nacharbeit und/oder ein Ausschuss bei der Herstellung der Komponenten der Elektromotoren deutlich verringert.

Weitere Einzelheiten, Merkmale und Vorteile der Erfindung ergeben sich aus der nachfolgenden Beschreibung und den Figuren. Es zeigen:
- Figur 1: eine schematische Ansicht eines inneren ersten Ringelements eines inneren Abblasrings gemäß einem Ausführungsbeispiel der Erfindung,
- Figur 2: eine schematische Ansicht eines inneren zweiten Ringelements des inneren Abblasrings gemäß dem Ausführungsbeispiel der Erfindung,
- Figur 3: eine schematische Schnittansicht des inneren ersten Ringelements des inneren Abblasrings gemäß dem Ausführungsbeispiel der Erfindung,
- Figur 4: eine erste schematische Detailansicht des inneren ersten Ringelements des inneren Abblasrings gemäß dem Ausführungsbeispiel der Erfindung,
- Figur 5: eine zweite schematische Detailansicht des inneren ersten Ringelements des inneren Abblasrings gemäß dem Ausführungsbeispiel der Erfindung,
- Figur 6: eine schematische Ansicht des inneren Abblasrings gemäß dem Ausführungsbeispiel der Erfindung,
- Figur 7: eine schematische Ansicht eines Teils des inneren Abblasrings gemäß dem Ausführungsbeispiel der Erfindung,
- Figur 8: eine schematische Ansicht eines äußeren ersten Ringelements eines äußeren Abblasrings gemäß einem Ausführungsbeispiel der Erfindung,
- Figur 9: eine schematische Ansicht eines äußeren zweiten Ringelements des äußeren Abblasrings gemäß dem Ausführungsbeispiel der Erfindung,
- Figur 10: eine schematische Schnittansicht des äußeren ersten Ringelements des äußeren Abblasrings gemäß dem Ausführungsbeispiel der Erfindung,
- Figur 11: eine erste schematische Detailansicht des äußeren ersten Ringelements des äußeren Abblasrings gemäß dem Ausführungsbeispiel der Erfindung,
- Figur 12: eine zweite schematische Detailansicht des äußeren ersten Ringelements des äußeren Abblasrings gemäß dem Ausführungsbeispiel der Erfindung,
- Figur 13: eine schematische Ansicht des äußeren Abblasrings gemäß dem Ausführungsbeispiel der Erfindung,
- Figur 14: eine schematische Ansicht eines Teils des äußeren Abblasrings gemäß dem Ausführungsbeispiel der Erfindung, und
- Figur 15: eine schematische Ansicht einer Abblasvorrichtung gemäß einem Ausführungsbeispiel der Erfindung.

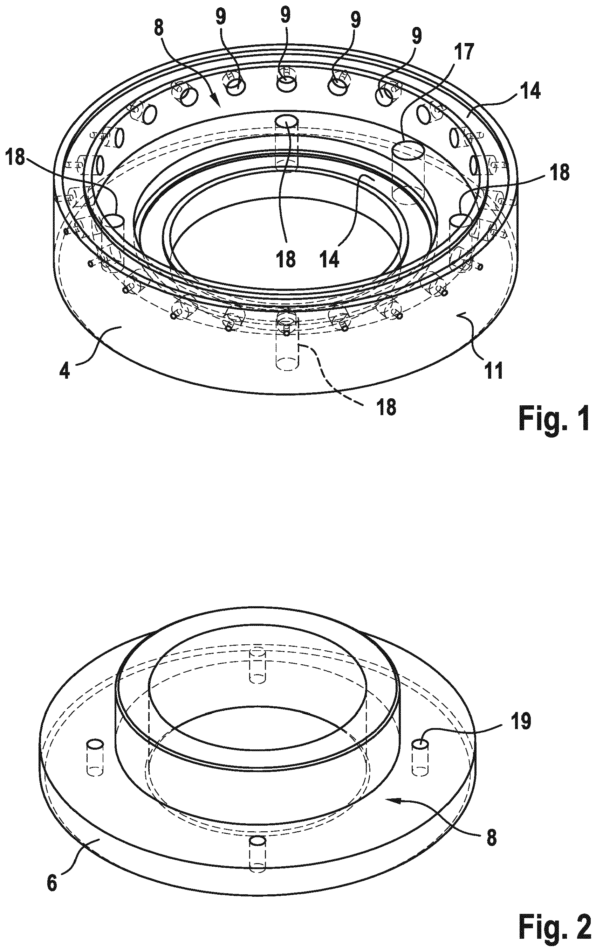

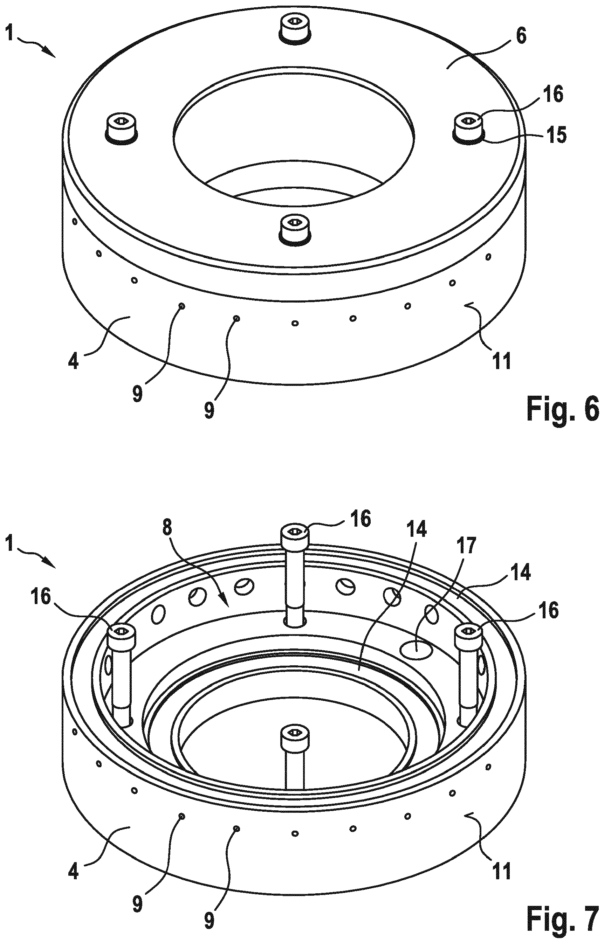

Figur 1 zeigt schematisch ein inneres erstes Ringelement 4. Das innere erste Ringelement 4 ist Teil eines inneren Abblasrings 1 gemäß einem Ausführungsbeispiel der Erfindung, der in Figuren 6 und 7 gezeigt ist.

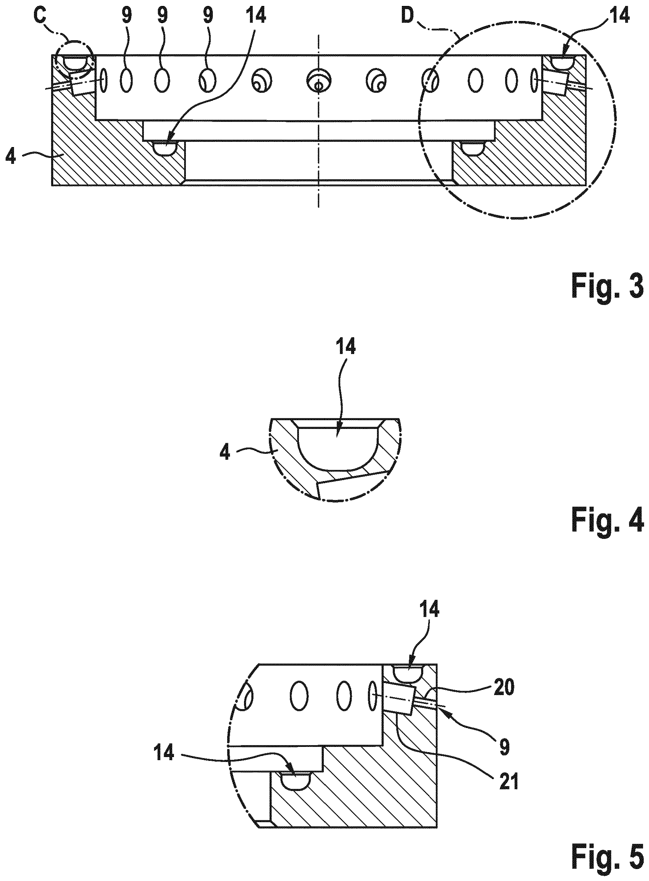

Das innere erste Ringelement 4 weißt vorteilhafterweise ein gestuftes Profil mit einer L-förmigen Außenfläche und eine gestufte Innenfläche auf. Somit weist das innere erste Ringelement 4 insbesondere zwei Außenwände auf. In einer äußeren Umfangsfläche 11 ist eine Vielzahl von Bohrungen angeordnet, so dass die äußere Umfangsfläche 11 eine Vielzahl von Düsen 9 aufweist. Die Düsen werden nachfolgend mit Bezug auf Figuren 3 bis 5 näher beschrieben.

Durch die Düsen 9 ist ermöglicht, dass Luft aus der äußeren Umfangsfläche 11 des inneren ersten Ringelements 4 ausgeblasen wird. Hierzu ist Frischluft über einen Lufteinlass 17 zuführbar. Der Lufteinlass 17 dient zum Zuführen von Luft zu einem ringförmigen Hohlraum 8. Der ringförmige Hohlraum 8 wird dadurch erreicht, dass ein inneres zweites Ringelement 6 mit dem inneren ersten Ringelement 4 kombiniert wird. innere Das zweite Ringelement 6 ist in Figur 2 dargestellt.

Wie aus Figur 2 ersichtlich ist, weist auch das innere zweite Ringelement 6 ein gestuftes Profil mit einer L-förmigen Außenfläche und einer gestuften Innenfläche auf. Werden das innere erste Ringelement 4 und das innere zweite Ringelement 6 kombiniert, so greifen die gestuften Profile ineinander ein. Dies führt dazu, dass der beschriebene Hohlraum 8 gegenüber der Umgebung abgegrenzt wird. Der Hohlraum 8 ist insbesondere lediglich durch die Düsen 9 und durch den Lufteinlass 17 mit einer äußeren Umgebung des inneren ersten Elements 4 und des inneren zweiten Ringelement 6 verbunden.

Um sicherzustellen, dass ein Fluid, das dem Hohlraum 8 über den Lufteinlass 17 zugeführt wird, den Hohlraum 8 nur über die Düsen 9 verlässt, weist das innere erste Ringelement 4 zwei Dichtungsaufnahmen 14 auf. Die Dichtungsaufnahmen 14 dienen zum Aufnahmen jeweils einer Dichtung, insbesondere jeweils eines O-Rings, so das der Hohlraum 8 gegenüber einer äußeren Umgebung abgedichtet ist. Insbesondere ist auf diese Weise vermieden, dass ein innerhalb des Hohlraums 8 vorhandenes Fluid nicht durch Montagestellen zwischen dem inneren ersten Ringelement 4 und dem inneren zweiten Ringelement 6 entweichen kann.

Figur 3 zeigt schematisch eine Schnittansicht durch das innere erste Ringelement 4. Dabei ist insbesondere in dem als Detail C markierten Bereich, der in Figur 4 dargestellt ist, erkennbar, dass die Dichtungsaufnahme 14 eine U-förmige Ausnehmung umfasste. Somit ist eine Abdichtung des inneren ersten Ringelements 4 zu dem inneren zweiten Ringelement 6 ermöglicht.

In Figur 3 ist außerdem der Aufbau der Düsen 9 erkennbar. So ist eine Düse 9 in dem als Detail D markierten Bereich, der in Figur 5 dargestellt ist, erkennbar. Die Düsen 9 sind durch eine Bohrung durch eine Wand des inneren ersten Ringelements 4 realisiert, wobei die Bohrung eine erste Bohrung 20 und ein zweite Bohrung 21 umfasst. Die erste Bohrung 20 und die zweite Bohrung 21 sind insbesondere kollinear ausgebildet und weisen somit dieselbe Mittelachse auf. Es ist vorgesehen, dass die erste Bohrung 20 einen geringeren Durchmesser aufweist als die zweite Bohrung 21. Die zweite Bohrung 21 schließt an den Hohlraum 8 an, während die erste Bohrung 20 aus dem ersten Abblasring 1 hinaus weist.

Durch die zweite Bohrung 21 ist aufgrund des vergrößerten Durchmessers eine leichte Reinigbarkeit der Düsen 9 gegeben. Durch die erste Bohrung 20 ist eine Charakteristik der Düsen 9 einstellbar. Insbesondere ist eine Ausströmungsrichtung sowie eine Ausströmgeschwindigkeit über die erste Bohrung 20 festlegbar.

In Figur 1 ist außerdem gezeigt, dass das innere erste Ringelement 4 Gewindebohrungen 18 aufweist. Aus Figur 2 ist ersichtlich, dass das innere zweite Ringelement 6 korrespondierende Durchgangsbohrungen 19 aufweist. Die Durchgangsbohrungen 19 und die Gewindebohrungen 18 dienen zum Fixieren des inneren ersten Ringelements 4 und des inneren zweiten Ringelements 6 aneinander. Dies ist aus den Figuren 6 und 7 ersichtlich.

Figur 6 zeigt eine schematische Ansicht eines inneren Abblasring 1, der aus dem inneren ersten Ringelement 4 und dem inneren zweiten Ringelement 6, wie in den Figuren 1 und 2 gezeigt, zusammengesetzt ist. Figur 7 zeigt denselben inneren Abblasring 1, wobei lediglich das innere zweite Ringelement 6 und die in den Dichtungsaufnahmen 14 vorhandenen Dichtungen nicht gezeigt sind.

Es ist ersichtlich, dass das innere erste Ringelement 4 und das innere zweite Ringelement 6 durch Schrauben 16 aneinander fixiert sind. Die Schrauben 16 sind durch die Durchgangsbohrungen 19 geführt und innerhalb der Gewindebohrungen 18 verschraubt. Um einen Fluidaustritt aus dem Hohlraum 8 durch die Gewindebohrungen 18 zu vermeiden, ist hier entweder ein Dichtmittel und/oder ein Teflonband verwendbar. Um zu verhindern, das Fluid durch die Durchgangsbohrungen 19 aus dem Hohlraum 8 austritt, ist eine Dichtungsscheibe 15 vorhanden. Somit ist sichergestellt, dass Fluid, dass durch den Lufteinlass 17 in den Hohlraum 8 gelangt, den Hohlraum 8 ausschließlich über die Düsen 9 verlassen kann.

Durch die Verschraubung mittels der Schrauben 16 ist der innere Abblasring 1 jederzeit in das innere erste Ringelement 4 und das innere zweite Ringelement 6 zerlegbar. Nach dem Zerlegen sind die Düsen 9 von beiden Seiten, das bedeutet sowohl von Seiten der ersten Bohrung 20 als auch von Seiten der zweiten Bohrung 21 erreichbar. Auf diese Weise sind die Düsen 9 einfach und aufwandsarm reinigbar. Besonders vorteilhaft ist vorgesehen, dass der innere Abblasring 1 aus einem rostfreien Stahl gefertigt ist, so das eine Reinigung der Düsen 9 auch chemisch möglich ist, ohne dabei den inneren Abblasring zu beschädigen.

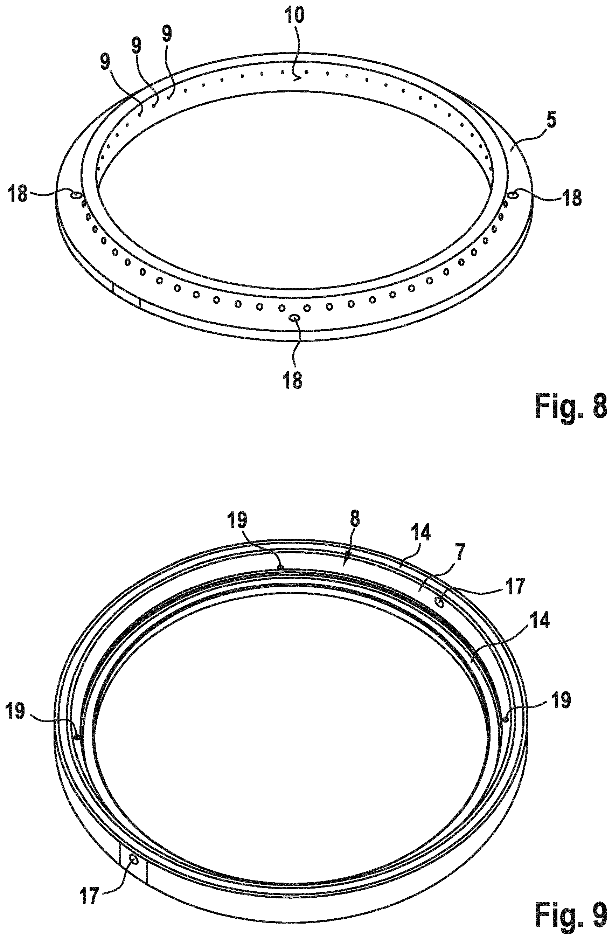

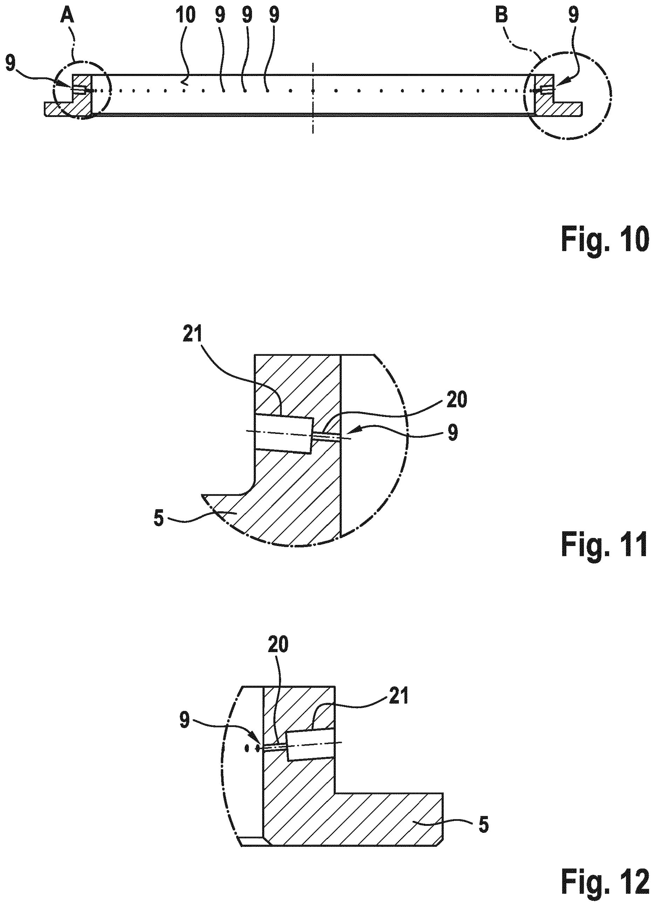

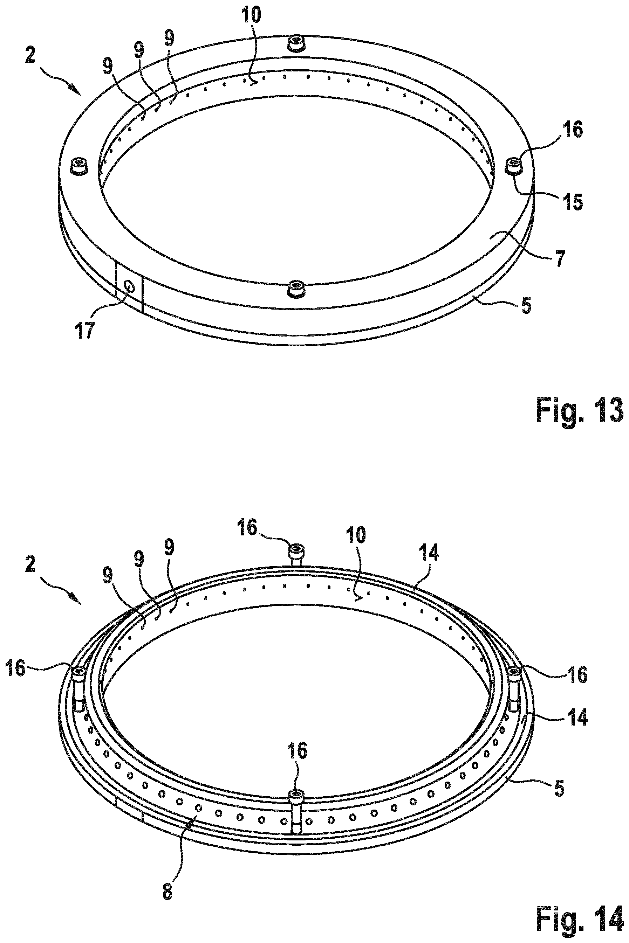

Figur 8 zeigt ein äußeres erstes Ringelement 5 eines äußeren Abblasring 2 gemäß einem Ausführungsbeispiel der Erfindung. Figur 9 zeigt ein äußeres zweites Ringelement 7 des äußeren Abblasring 2. Die Figuren 10 bis 12 zeigen verschiedene Schnittansichten durch das äußere erste Ringelement 5. Schließlich zeigen Figuren 13 und 14 den äußeren Abblasring 2 selbst.

Funktional zeigt Figur 8 dasselbe wie Figur 1. Ebenso zeigt Figur 9 funktional dasselbe wie Figur 2. Figur 10 zeigt funktional dasselbe wie Figur 3, während die Figuren 11 und 12 funktional dasselbe zeigen wie Figuren 4 und 5. Schließlich zeigen die Figuren 13 und 14 funktional dasselbe wie die Figuren 6 und 7. Daher ist die obige Beschreibung der Figuren 1 bis 7 auch für die Figuren 8 bis 14 gültig, wobei lediglich der Begriff innerer Abblasring 1 durch den Begriff äußerer Abblasring 2, der Begriff inneres erstes Ringelement 4 durch den Begriff äußeres erstes Ringelement 5, der Begriff inneres zweites Ringelement 6 durch den Begriff äußeres zweites Ringelement 7, und schließlich der Begriff äußere Umfangsfläche 11 durch den Begriff innere Umfangsfläche 10 zu ersetzen ist.

Im Unterschied zu dem inneren Abblasring 1, bei dem über die Düsen 9 Fluid aus der äußeren Umfangsfläche 11 ausblasbar ist, ist durch den äußeren Abblasring 2 Fluid über die Düsen 9 aus der inneren Umfangsfläche 10 ausblasbar. Grundsätzlich sind der Aufbau und die Funktionsweise sowohl des inneren Abblasring 1 und des äußeren Abblasring 2 identisch.

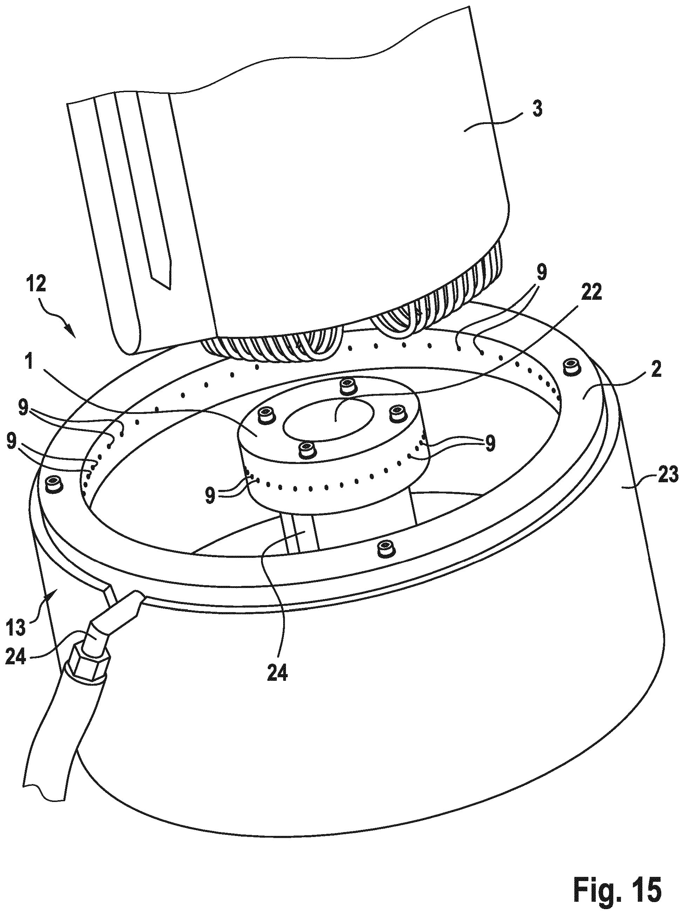

Figur 15 zeigt schematisch eine Abblasvorrichtung 12, mit der ein Stator 3 eines Elektromotors reinigbar ist. Der Stator 3 wird somit als Komponente des Elektromotors angesehen. Die Abblasvorrichtung 12 umfasst einen inneren Abblasring 1 sowie einen äußeren Abblasring 2 wie jeweils zuvor beschrieben und in den Figuren 1 bis 14 gezeigt.

Der innere Abblasring 1 ist konzentrisch zu dem äußeren Abblasring 2 angeordnet, wobei ein äußerer Durchmesser des inneren Abblasring 1 geringer als ein innerer Durchmesser des äußeren Abblasring 2 ist. Somit ist zwischen den inneren Abblasring 1 und den äußeren Abblasring 2 der Stator 3 hindurchführbar. Während des Hindurchführens des Stators 3 ist dieser durch die Düsen 9 des inneren Abblasring 1 und des äußeren Abblasring 2 einlegbar.

Der innere Abblasring 1 ist von einem Stegelement 22 gehalten. Der äußere Abblasring 2 ist an einer Außenwand 23 befestigt. Dabei ist besonders vorteilhaft vorgesehen, dass Stegelement 22 und Außenwand 23 gemeinsam ein Topfelement 13 bilden. Dieses Topfelement 13 kann insbesondere das innere erste Ringelement 4 oder das innere zweite Ringelement 6 und zusätzlich das äußere erste Ringelement 5 oder das äußere zweite Ringelement 7 ersetzen. Von dem Topfelement 13 ist das von dem Stator 3 abgeblasene Harz auffangbar und insbesondere abführbar.

Schließlich ist ersichtlich, dass sowohl der innere Abblasring 1 als auch der äußere Abblasring 2 über eine Luftversorgung 24 mit Frischluft versorgt werden. Die Frischluft wird über die Luftversorgung 24 den Lufteinlässen 17 zugeführt und gelangt so in die Hohlräume 8 des inneren Abblasring 1 und des äußeren Abblasring 2. Von dort aus wird die Frischluft durch die Düsen 9 zum Reinigen auf den Stator 3 geleitet.

Es ist ersichtlich, dass aufgrund des stabilen Aufbaus insbesondere des äußeren Abblasring 2 auch die Außenwand 23 stabil und nicht verformbar ist. Somit kann die Außenwand 23 selbst aus einem relativ dünnen Blech gefertigt sein. Somit ist ein einfacher und kostengünstiger Aufbau der Abblasvorrichtung 12 ermöglicht.

### Bezugszeichenliste:

- 1: innerer Abblasring
- 2: äußerer Abblasring
- 3: Stator
- 4: inneres erstes Ringelement
- 5: äußeres erstes Ringelement
- 6: inneres zweites Ringelement
- 7: äußeres zweites Ringelement
- 8: Hohlraum
- 9: Düse
- 10: innere Umfangsfläche
- 11: äußere Umfangsfläche
- 12: Abblasvorrichtung
- 13: Topfelement
- 14: Dichtungsaufnahme
- 15: Dichtungsscheibe
- 16: Schraube
- 17: Lufteinlass
- 18: Gewindebohrung
- 19: Durchgangsbohrung
- 20: erste Bohrung
- 21: zweite Bohrung
- 22: Stegelement
- 23: Außenwand
- 24: Luftversorgung

## Patentansprüche

1. Abblasring (1, 2) zum Reinigen von Komponenten (3) eines Elektromotors, umfassend
• ein erstes Ringelement (4, 5), und
• ein zweites Ringelement (6, 7),
• wobei das erste Ringelement (4, 5) und/oder das zweite Ringelement (6, 7) Düsen (9) aufweisen, die sich entlang einer inneren Umfangsfläche (10) und/oder einer äußeren Umfangsfläche (11) des Abblasrings (1, 2) erstrecken,
**dadurch gekennzeichnet,**
• **dass** das erste Ringelement (4, 5) und das zweite Ringelement (6, 7) zusammengesetzt sind und einen ringförmigen Hohlraum (8) innerhalb des Abblasrings (1, 2) umschließen,
• **dass** der Abblasring (1, 2) in das erste Ringelement (4, 5) und das zweite Ringelement (6, 7) zerlegbar und aus dem ersten Ringelement (4, 5) und dem zweiten Ringelement (6, 7) zusammensetzbar ist, und
• **dass** die Düsen (9) mit dem ringförmigen Hohlraum (8) verbunden sind.

2. Abblasring (1, 2) nach Anspruch 1, **dadurch gekennzeichnet, dass** die Düsen (9) als Bohrung (20, 21) innerhalb des ersten Ringelements (4, 5) und/oder des zweiten Ringelements (6, 7) ausgebildet sind.

3. Abblasring (1, 2) nach Anspruch 2, **dadurch gekennzeichnet, dass** ein dem Hohlraum (8) zugewandtes Ende der Bohrung (20, 21) einen größeren Durchmesser aufweist als ein gegenüberliegendes Ende der Bohrung (20, 21).

4. Abblasring (1, 2) nach einem der vorhergehenden Ansprüche, **dadurch gekennzeichnet, dass** entweder das erste Ringelement (4, 5) oder das zweite Ringelement (6, 7) die Düsen (9) aufweist.

5. Abblasring (1, 2) nach einem der vorhergehenden Ansprüche, **dadurch gekennzeichnet, dass** das erste Ringelement (4, 5) und das zweite Ringelement (6, 7) jeweils zumindest zwei Dichtungsaufnahmen (14) aufweisen, in denen Dichtungen zum Abdichten des Hohlraums (8) anordenbar sind.

6. Abblasring (1, 2) nach einem der vorhergehenden Ansprüche, **dadurch gekennzeichnet, dass** das erste Ringelement (4, 5) mit dem zweiten Ringelement (6, 7) formschlüssig und/oder stoffschlüssig und/oder reibschlüssig, insbesondere reversibel, verbunden ist.

7. Abblasring (1, 2) nach einem der vorhergehenden Ansprüche, **dadurch gekennzeichnet, dass** das erste Ringelement (4, 5) und/oder das zweite Ringelement (6, 7) aus Aluminium und/oder Stahl, insbesondere aus nicht rostendem Stahl, gefertigt sind.

8. Abblasring (1, 2) nach einem der vorhergehenden Ansprüche, **dadurch gekennzeichnet, dass** das erste Ringelement (4, 5) und das zweite Ringelement (6, 7) ein L-förmiges Profil aufweisen.

9. Abblasvorrichtung (12) umfassend einen inneren Abblasring (1) und einen äußeren Abblasring (2),
• wobei der innere Abblasring (1) einen Außendurchmesser aufweist, der geringer als ein Innendurchmesser des äußeren Abblasrings (2) ist,
• wobei der innere Abblasring (1) ein inneres erstes Ringelement (4) mit einer Vielzahl von Düsen (9) und der äußere Abblasring (2) ein äußeres erstes Ringelement (5) mit einer Vielzahl von Düsen umfasst,
• wobei die Düsen (9) auf einer äußeren Umfangsfläche (11) des inneren Abblasring (1) und auf einer inneren Umfangsfläche (10) des äußeren Abblasring (2) angeordnet sind, und
• wobei der innere Abblasring (1) und der äußere Abblasring (2) Abblasringe (1, 2) nach einem der vorhergehenden Ansprüche sind.

10. Abblasvorrichtung (12) nach Anspruch 9, **dadurch gekennzeichnet, dass** der innere Abblasring (1) konzentrisch zu dem äußeren Abblasring (2) angeordnet ist.

11. Abblasvorrichtung (12) nach Anspruch 9 oder 10, **dadurch gekennzeichnet, dass** der innere Abblasring (1) ein inneres zweites Ringelement (6) und der äußere Abblasring (2) ein äußeres zweites Ringelement (7) aufweist, wobei das innere erste Ringelement (4) oder das äußere erste Ringelement (5) und das innere zweite Ringelement (6) oder das äußere zweite Ringelement (7) einstückig als Topfelement (13) ausgebildet sind, wobei die Komponente (3) zum Reinigen in das Topfelement (13) einführbar ist.

## Claims

1. Blow-off ring (1, 2) for cleaning components (3) of an electric motor, comprising
· a first ring element (4, 5), and
· a second ring element (6, 7),
wherein the first ring element (4, 5) and/or the second ring element (6, 7) have nozzles (9) which extend along an inner circumferential surface (10) and/or an outer circumferential surface (11) of the blow-off ring (1, 2),
characterized
· in that the first ring element (4, 5) and the second ring element (6, 7) are put together and enclose an annular cavity (8) within the blow-off ring (1, 2),
· in that the blow-off ring (1, 2) can be disassembled into the first ring element (4, 5) and the second ring element (6, 7) and can be put together from the first ring element (4, 5) and the second ring element (6, 7), and
· in that the nozzles (9) are connected to the annular cavity (8).

2. Blow-off ring (1, 2) according to Claim 1, **characterized in that** the nozzles (9) are in the form of a bore (20, 21) within the first ring element (4, 5) and/or the second ring element (6, 7).

3. Blow-off ring (1, 2) according to Claim 2, **characterized in that** one end of the bore (20, 21), which end faces the cavity (8), has a larger diameter than an opposite end of the bore (20, 21).

4. Blow-off ring (1, 2) according to one of the preceding claims, **characterized in that** either the first ring element (4, 5) or the second ring element (6, 7) has the nozzles (9).

5. Blow-off ring (1, 2) according to one of the preceding claims, **characterized in that** the first ring element (4, 5) and the second ring element (6, 7) each have at least two seal receptacles (14) in which seals for sealing off the cavity (8) can be arranged.

6. Blow-off ring (1, 2) according to one of the preceding claims, **characterized in that** the first ring element (4, 5) is, in particular reversibly, connected to the second ring element (6, 7) in an interlocking and/or cohesive and/or frictional manner.

7. Blow-off ring (1, 2) according to one of the preceding claims, **characterized in that** the first ring element (4, 5) and/or the second ring element (6, 7) are manufactured from aluminium and/or steel, in particular from stainless steel.

8. Blow-off ring (1, 2) according to one of the preceding claims, **characterized in that** the first ring element (4, 5) and the second ring element (6, 7) have an L-shaped profile.

9. Blow-off apparatus (12) comprising an inner blow-off ring (1) and an outer blow-off ring (2),
· wherein the inner blow-off ring (1) has an outside diameter which is smaller than an inside diameter of the outer blow-off ring (2),
· wherein the inner blow-off ring (1) comprises an inner first ring element (4) having a large number of nozzles (9), and the outer blow-off ring (2) comprises an outer first ring element (5) having a large number of nozzles,
· wherein the nozzles (9) are arranged on an outer circumferential surface (11) of the inner blow-off ring (1) and on an inner circumferential surface (10) of the outer blow-off ring (2), and
· wherein the inner blow-off ring (1) and the outer blow-off ring (2) are blow-off rings (1, 2) according to one of the preceding claims.

10. Blow-off apparatus (12) according to Claim 9, **characterized in that** the inner blow-off ring (1) is arranged concentrically in relation to the outer blow-off ring (2).

11. Blow-off apparatus (12) according to Claim 9 or 10, **characterized in that** the inner blow-off ring (1) has an inner second ring element (6) and the outer blow-off ring (2) has an outer second ring element (7), wherein the inner first ring element (4) or the outer first ring element (5) and the inner second ring element (6) or the outer second ring element (7) are integrally formed as a pot element (13), wherein the component (3) can be inserted into the pot element (13) for cleaning purposes.

## Revendications

1. Bague de soufflage (1, 2) pour le nettoyage de composants (3) d'un moteur électrique, comprenant :
- un premier élément de bague (4, 5), et
- un deuxième élément de bague (6, 7),
- le premier élément de bague (4, 5) et/ou le deuxième élément de bague (6, 7) comprenant des buses (9), qui s'étendent le long d'une surface circonférentielle intérieure (10) et/ou d'une surface circonférentielle extérieure (11) de la bague de soufflage (1, 2),
**caractérisée en ce que**
- le premier élément de bague (4, 5) et le deuxième élément de bague (6, 7) sont assemblés et entourent une cavité annulaire (8) à l'intérieur de la bague de soufflage (1, 2),
- la bague de soufflage (1, 2) peut être décomposée en le premier élément de bague (4, 5) et le deuxième élément de bague (6, 7) et peut être assemblée à partir du premier élément de bague (4, 5) et du deuxième élément de bague (6, 7), et
- les buses (9) sont reliées à la cavité annulaire (8) .

2. Bague de soufflage (1, 2) selon la revendication 1, **caractérisée en ce que** les buses (9) sont configurées sous forme d'alésage (20, 21) à l'intérieur du premier élément de bague (4, 5) et/ou du deuxième élément de bague (6, 7).

3. Bague de soufflage (1, 2) selon la revendication 2, **caractérisée en ce qu'**une extrémité de l'alésage (20, 21) tournée vers la cavité (8) présente un plus grand diamètre qu'une extrémité opposée de l'alésage (20, 21).

4. Bague de soufflage (1, 2) selon l'une quelconque des revendications précédentes, **caractérisée en ce que** soit le premier élément de bague (4, 5), soit le deuxième élément de bague (6, 7) comprend les buses (9) .

5. Bague de soufflage (1, 2) selon l'une quelconque des revendications précédentes, **caractérisée en ce que** le premier élément de bague (4, 5) et le deuxième élément de bague (6, 7) comprennent chacun au moins deux logements de joint d'étanchéité (14), dans lesquels des joints d'étanchéité pour l'étanchéification de la cavité (8) peuvent être agencés.

6. Bague de soufflage (1, 2) selon l'une quelconque des revendications précédentes, **caractérisée en ce que** le premier élément de bague (4, 5) est relié au deuxième élément de bague (6, 7) par accouplement de forme et/ou par accouplement de matière et/ou par friction, notamment de manière réversible.

7. Bague de soufflage (1, 2) selon l'une quelconque des revendications précédentes, **caractérisée en ce que** le premier élément de bague (4, 5) et/ou le deuxième élément de bague (6, 7) sont fabriqués en aluminium et/ou en acier, notamment en acier inoxydable.

8. Bague de soufflage (1, 2) selon l'une quelconque des revendications précédentes, **caractérisée en ce que** le premier élément de bague (4, 5) et le deuxième élément de bague (6, 7) présentent un profil en forme de L.

9. Dispositif de soufflage (12) comprenant une bague de soufflage intérieure (1) et une bague de soufflage extérieure (2),
- la bague de soufflage intérieure (1) présentant un diamètre extérieur qui est inférieur à un diamètre intérieur de la bague de soufflage extérieure (2),
- la bague de soufflage intérieure (1) comprenant un premier élément de bague intérieur (4) muni d'une pluralité de buses (9) et la bague de soufflage extérieure (2) comprenant un premier élément de bague extérieur (5) muni d'une pluralité de buses,
- les buses (9) étant agencées sur une surface circonférentielle extérieure (11) de la bague de soufflage intérieure et sur une surface circonférentielle intérieure (10) de la bague de soufflage extérieure (2), et
- la bague de soufflage intérieure (1) et la bague de soufflage extérieure (2) étant des bagues de soufflage (1, 2) selon l'une quelconque des revendications précédentes.

10. Dispositif de soufflage (12) selon la revendication 9, **caractérisé en ce que** la bague de soufflage intérieure (1) est agencée concentriquement à la bague de soufflage extérieure (2).

11. Dispositif de soufflage (12) selon la revendication 9 ou 10, **caractérisé en ce que** la bague de soufflage intérieure (1) comprend un deuxième élément de bague intérieur (6) et la bague de soufflage extérieure (2) comprend un deuxième élément de bague extérieur (7), le premier élément de bague intérieur (4) ou le premier élément de bague extérieur (5) et le deuxième élément de bague intérieur (6) ou le deuxième élément de bague extérieur (7) étant configurés d'un seul tenant en tant qu'élément en forme de pot (13), le composant (3) pouvant être introduit dans l'élément en forme de pot (13) pour le nettoyage.
